# EUROPEAN PATENT APPLICATION

(11) **EP 0 724 926 A1**
(43) Date of publication of application: **07.08.1996**
(21) Application number: 95928619.6
(22) Date of filing: 18.08.1995
(51) Int. Cl.: B23H 1/10

(54) **ELECTRIC DISCHARGE MACHINE**

(30) Priority: 18.08.1994 JP 194154/94
(71) Applicant: FANUC LTD., Minamitsuru-gun, Yamanashi 401-05 (JP)
(72) Inventor: SAWADA, Kiyoshi, Sunto-gun Shizuoka 411 (JP); HIRAI, Toshio Fanuc Mansion Harimori 8-307, Yamanashi 401-05 (JP); OKUDA, Shinji Fanuc Mansion Harimori 12-304, Yamanashi 401-05 (JP); ODAKA, Shunichi Fanuc Dai-3 Vira-Karamatsu, Yamanashi 401-05 (JP)
(74) Representative: Kramer, Reinhold
(86) International application number: JP9501641
(87) International publication number: WO9605934

(57) **Abstract**

An electric discharge machine using a machining liquid both for cooling an electric discharge machining region and removing chips from the electric discharge machining region and for lubricating hydrostatic bearings included in guide mechanisms of a machine unit, and having a fluid circuits and a machining liquid processing unit. A pressurizing liquid processing unit having a pump (42) and a machining liquid filter (43) pressurizes and filters the machining liquid. The pressurized and filtered machining liquid is supplied through lubrication-purpose machining liquid supply lines (53 to 56) to the hydrostatic bearings (59) of the hydrostatic guide mechanisms, and through a machining-purpose machining liquid supply line (53) to the electric discharge machining region in which an electric discharge machining electrode (30) processes the work (32). The same electric discharge machining liquid is used both for lubricating the guide mechanisms and for cooling the electric discharge machining region and removing chips from the electric discharge machining region.

## Description

### TECHNICAL FIELD

The present invention relates to a novel constitution for an EDM (electric discharge machine) and, more particularly, to an EDM that uses a machining fluid also as a pressurizing fluid for hydrostatic bearing type guide mechanisms for guiding an electrode and a machined workpiece (referred to as a work) for relative movement along two orthogonal or three orthogonal axes and as a lubricant for lubricating the hydrostatic bearing type guide mechanisms in addition to the inherent purposes, i.e., cooling an ED machining region and removing machined chips in order that the EDM has a compact construction obtained at a reduced manufacturing cost, and is capable of achieving improved accuracy during electric discharge machining due to cooling of the entire EDM, including an ED machining region and the hydrostatic bearing type guide mechanisms, to an isothermal condition to thereby eliminate a thermal affect on errors which may deteriorate the accuracy of the ED machining.

### BACKGROUND ART

An EDM performs machining operation by using an electric discharge phenomenon in a machining region in which an ED machining electrode and the work are disposed opposite to each other with a small gap therebetween. The gap between the electrode and the work, i.e., the ED machining region, is immersed in a machining liquid contained in a machining liquid tank or a machining liquid is jetted into the ED machining region to cool an ED point by the cooling effect of the machining liquid and to remove chips by the chip removing effect of a pressure produced by the gasified machining liquid. Generally, the machining liquid used by the EDM is a liquid hydrocarbon and is pumped from a machining liquid reservoir, which is separate from the machining liquid tank, into the ED machining region in the machining liquid tank or directly into the ED machining region.

The EDM has a feed mechanism that moves a headstock supporting a main shaft provided with an electrode holder for holding an electrode for ED machining, and a work table mounting thereon the work for moving the work along, in most cases, three orthogonal axes, and a guide mechanism for guiding the feed motions. The feed mechanism has a drive motor and a feed screw mechanism, and the guide mechanism has a rolling guide mechanism, a hydrodynamic guide mechanism and a hydrostatic guide mechanism. The moving parts including the main shaft, the headstock and the work table are lubricated for smooth movement with a lubricant.

When the guide mechanism for guiding the moving part is a rolling guide mechanism having circulating rolling members, such as balls or rollers, generally, the rolling guide mechanism is lubricated by a lubricating system that applies grease to the rolling guide mechanism or fills and replenishes the rolling guide mechanism with grease. A rolling guide mechanism provided with non-circulating rollers is lubricated by a lubricating system that lubricates the rolling guide mechanism by periodic oiling or by an oil bath.

The hydrodynamic guide mechanism is lubricated by intermittently or continuously supplying a lubricating oil by pressure, and the hydrostatic guide mechanism is lubricated by continuously supplying a lubricating oil by pressure.

As can be understood from the foregoing description, the conventional EDM uses fluids of entirely different types having different properties as a machining liquid and as a lubricant for lubricating the guide mechanism and, therefore, the technical field relating to cooling and chip removal in the ED machining region and the technical field relating to lubricating the guide mechanism have been dealt with as being completely disconnected from each other.

It is understood that the ED machining liquid is deficient in lubricity and has an action to wash the lubricant off the guide mechanism, and that the lubricant, when mixed with the machining liquid, increases the viscosity of the machining liquid to make removal of chips difficult, is decomposed by the heat of discharge and, consequently is deposited in the machining tank to possibly cause abnormal discharge.

Although sealing measures, such as sealing members and the like provided in pipes and necessary portions of the machine, are taken to prevent the mixing of the lubricant and the ED machining liquid, the lubricant and the ED machining liquid are mixed and, for example, the lubricating ability of the lubricant is deteriorated. Furthermore, when a lubricating oil is used as the lubricant, the EDM needs a tank for reserving the lubricating oil, a pump for circulating the lubricating oil, a filter for filtering the lubricating oil and such in addition to a tank for reserving the electric discharge machining liquid, a pump for feeding the ED machining liquid, a filter for filtering the ED machining liquid and such, which disadvantageously enlarges the EDM.

### DISCLOSURE OF THE INVENTION

A principal object of the present invention is to solve the afore-mentioned problems in the conventional EDM and to overcome the above-mentioned disadvantages of the conventional EDM.

Another object of the present invention is to provide an EDM having a novel constitution capable of using a machining liquid for lubricating guide mechanisms as well as for the inherent purposes for cooling an ED machining region and removing chips.

With the foregoing objects in view, the present invention forms a lubrication-purpose fluid system for supplying a pressurized machining liquid at an appropriate pressure level to the hydrostatic bearings of a hydrostatic guide mechanism and recovering the machining liquid, and a machining-purpose liquid system for supplying the machining liquid to an ED machining region between an ED machining electrode and a work for cooling and removing chips to use the same machining liquid for lubricating the guide mechanism, cooling the ED machining region and removing chips from the ED machining region.

In accordance with the present invention, there is provided an EDM for machining a work by electric discharge between a machining electrode and the work, which is provided with hydrostatic bearing type guide mechanisms for guiding the machining electrode and the work for relative movement, the EDM comprising:
a machining liquid supply conduit system for distributing a machining liquid reserved in a machining liquid reservoir by pressure to an electric discharge machining region extending around the electrode and to the guide mechanism;
a machining liquid processing means arranged in the machining liquid supply conduit system; and
a machining liquid recovering conduit system for recovering the machining liquid from both the electric discharge machining region and the hydrostatic bearing type guide mechanism.

The machining liquid supply conduit system includes a lubrication-purpose fluid circuit for supplying the pressurized machining liquid as a lubricating medium to the guide mechanisms, and a machining-purpose fluid circuit for supplying the machining liquid to the electric discharge machining region to cool the electrode and the work and to remove chips. The machining liquid processing means has a pumping means for pumping the machining liquid from the machining liquid reservoir and to supply the same by pressure, and a filtering means for purifying the machining liquid.

Preferably, the filtering means comprises at least two filter elements, the filtering ability of one of the two filter elements being higher than that of the other. The former filter element is placed in the lubrication-purpose fluid circuit.

The pumping means may have a first pump for pumping the machining liquid from the machining liquid reservoir and pressurizing the machining liquid to be supplied both through the machining-purpose fluid circuit and through the lubrication-purpose fluid circuit, and a second pump provided in the lubrication-purpose fluid circuit to pressurize the machining liquid to be supplied to the guide mechanisms at a pressure higher than that of the machining liquid to be supplied through the machining-purpose fluid circuit.

The machining liquid supply conduit system may have a machining-purpose fluid circuit connecting the machining liquid reservoir to the electric discharge machining region, and a lubrication-purpose fluid circuit connecting the machining liquid reservoir to the guide mechanisms, the machining-purpose fluid circuit and the lubrication-purpose fluid circuit may be individually provided with separate machining liquid processing means to enable the lubrication-purpose fluid circuit to function even while the machining-purpose fluid circuit is inoperative.

The machining liquid reservoir may have a first machining liquid reserving unit for receiving the machining liquid recovered by the machining liquid recovering conduit system, and a second machining liquid reserving unit for receiving the machining liquid pumped from the first machining liquid reserving unit and filtered by a filter, and the machining liquid may be supplied by pressure from the second machining liquid reserving unit into the machining liquid supply conduit system.

Furthermore, the machining liquid reservoir may be provided with a lubrication-purpose machining liquid reserving unit for reserving the machining liquid to be used for lubrication and a machining-purpose machining liquid reserving unit for reserving the machining liquid to be used for machining, machining liquids of the same quality may be reserved in those machining liquid reserving units, and the machining liquids may be supplied separately from the lubrication-purpose machining liquid reserving unit and the machining-purpose machining liquid reserving unit into the lubrication-purpose fluid circuit and the machining-purpose fluid circuit, respectively, of the machining liquid supply conduit system.

The EDM of the foregoing constitution is able to use the ED machining liquid for a machining purposes, i.e., for cooling the ED machining region and removing chips, and for lubricating purposes for supplying the machining liquid by pressure to the hydrostatic bearings of the guide mechanism to form lubricant films over the sliding surfaces of the bearings. Accordingly, the EDM needs only the machining liquid reservoir for reserving the machining liquid, and hence the auxiliary systems of the EDM can simplified.

Trouble in the machining functions of the ED machine will not arise at all even if the lubrication-purpose machining liquid and the machining-purpose machining liquid are mixed in the machining liquid recovering conduit system, and therefore, the EDM can be formed in a simple, compact construction. Consequently, the operability of the EDM is improved and the EDM can be produced at a reduced manufacturing cost.

### BRIEF DESCRIPTION OF THE DRAWINGS

The above and other objects, features and advantages of the present invention will become more apparent from the following description taken in connection with the accompanying drawings in which:
Fig. 1 is a diagrammatic view of a principal constitution including a machining liquid supply system of an EDM in a first embodiment according to the present invention;
Fig. 2 is schematic sectional view of a hydrostatic bearing incorporated into a guide mechanism to be employed in preferred embodiments of the present invention, including the first embodiment;
Fig. 3 is a diagrammatic view, similar to Fig. 1, of a principal constitution of an EDM according to a second embodiment of the present invention;
Fig. 4 is a diagrammatic view, similar to Fig. 1, of a principal constitution of an EDM according to a third embodiment of the present invention;
Fig. 5 is a diagrammatic view of a principal constitution of an EDM in a fourth embodiment according to the present invention;
Fig. 6 is a diagrammatic view of a principal constitution of an EDM according to a fifth embodiment of the present invention;
Fig. 7 is a diagrammatic view of a principal constitution of an EDM according to a sixth embodiment of the present invention.

### BEST MODE FOR CARRYING OUT THE INVENTION

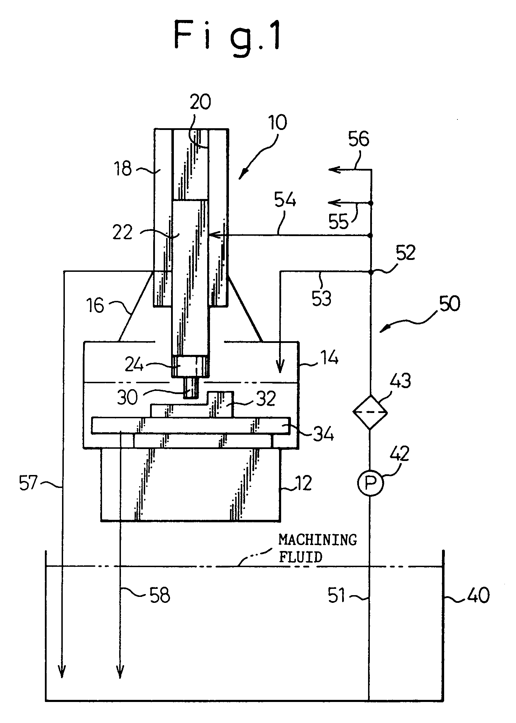

Referring to Fig. 1, an EDM according to a preferred embodiment of the present invention is embodied as a diesinking electric discharge machine.

A machine unit 10 of the EDM includes, as principal components thereof, a base 12, a machining tank 14 mounted on the base 12, a column 16 set in an upright position on the base 12, a headstock 18 held on the column 16, and a main shaft 22 supported for sliding movement along the guide surface portion 20 of the headstock 18 along a longitudinal axis, for example, a Z-axis. An electrode holder 24 detachably holding an electric discharge electrode 30 is mounted on the lower end of the main shaft 22. The machining electrode 30 held by the electrode holder 24 moves together with the main shaft 22 along the longitudinal axis when the main shaft 22 is driven for longitudinal sliding movement by a drive motor, not shown. A guide mechanism formed between the main shaft 22 and the guide surface portion 20 of the headstock 18 ensures the smooth sliding movement of the main shaft 22.

A work table 34 is received in the machining tank 14 mounted on the base 12, and the work 32 to be machined is fastened to the upper surface of the work table 34 by a suitable clamping means. The work table 34 is movable in the machining tank 14 along one axis or two axes (X-axis and Y-axis) perpendicular to the longitudinal axis (Z-axis). A feed motor, not shown, drives the work table 34 for movement along the X-axis and the Y-axis along a guide surface. A guide mechanism ensures the smooth sliding movement of the work table 34 along the X-axis and the Y-axis.

A machining liquid tank 40 for reserving a machining liquid for ED machining is installed in combination with the machine unit 10 of the EDM. A fixed quantity of the machining liquid is reserved in the machining liquid tank 40. In this embodiment, the EDM is provided with a machining liquid supply conduit system 50 and a machining liquid recovering conduit system 60 to use the machining liquid contained in the machining liquid tank 40 both as a machining-purpose machining liquid for ED machining to be carried out within the machining tank 14 and as a lubrication-purpose machining liquid for lubricating the guide mechanism for guiding the main shaft 22, and hydrostatic bearings, which will be described later, incorporated into guide mechanisms for guiding the work table 34.

The machining liquid supply conduit system 50 has a machining liquid supply line 51 extending between the machining liquid tank 40 and a branching point 52, a machining-purpose machining liquid line 53 extending between the branching point 52 and the machining tank 14 to supply the machining-purpose machining liquid into the machining tank 14, and lubrication-purpose machining liquid supply lines 54, 55 and 56 extending from the branching point 52 to supply the lubrication-purpose machining liquid to hydrostatic bearings included in the X-axis, the Y-axis and the Z-axis guide mechanism. A machining liquid processing means including a pump 42 for pressurizing the machining liquid and a machining liquid filter 43 is installed in the machining-purpose machining liquid supply line 51 to pressurize the machining liquid at a desired pressure and to filter out the dust in the machining liquid. The machining liquid from which the dust has been completely filtered out is supplied particularly to the hydrostatic bearings.

The lubricating-purpose machining liquid supplied to the guide mechanisms is returned through suitable liquid sumps, not shown, included in the guide mechanisms and a machining liquid recovering line 57 into the machining liquid tank 40. The machining- purpose machining liquid used for cooling the electrode 30 and the work 32 and for removing chips and dust produced by machining during ED machining for machining the work 32 with the electrode 30 is returned through a machining liquid recovering line 58 into the machining liquid tank 40.

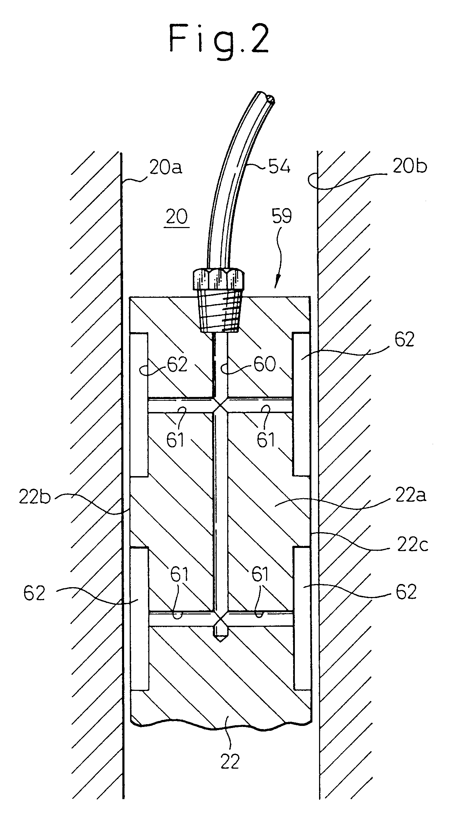

Figure 2 illustrates a hydrostatic bearing 59 included in the guide mechanism formed between the guide surface 20 of the headstock 18 and the main shaft 22 shown in Fig. 1 as a representative hydrostatic bearing. The hydrostatic bearing 59 has an inlet passage 60 to receive the pressurized machining liquid supplied to the sliding part 22a of the main shaft 22, and distributing passages 61 for distributing the pressurized machining liquid from the inlet passage 60 to a suitable number of bearing pockets 62 formed in the opposite sliding surfaces 22b and 22c of the sliding part 22a. Two sliding surfaces 20a and 20b are formed in the guide surface 20 of the headstock 18 so as to correspond to the sliding surfaces 22b and 22c of the sliding part 22a of the main shaft 22, respectively. When the pressurized machining liquid supplied into the bearing pockets 62 of the sliding part 22a of the main shaft 22, the machining liquid forced out of the bearing pockets 62 forms films of the pressurized machining liquid to hold the sliding surfaces 20a and 20b of the sliding part 22a at a neutral position separated from the sliding surfaces 20a and 20b of the guide surface 20. Accordingly, the sliding part 22a is able to slide smoothly, on the film of pressurized machining liquid, along the sliding surfaces 20a and 20b of the guide surface 20.

Since the sliding part 22a is formed integrally with the main shaft 22 or fixedly joined to the upper end of the main shaft 22, the main shaft 22 is able to slide smoothly in a vertical direction along the longitudinal axis (Z-axis) as the sliding part 22a slides smoothly.

As is apparent from the foregoing description, in the EDM embodying the present invention shown in Fig. 1, the machining liquid pumped up from the single machining liquid tank 40 and pressurized by the pump 42 is filtered and purified by the machining liquid filter 43, and then the machining liquid is supplied through the machining liquid supply conduit system 50 to the ED machining region in the machining tank 14 and to the hydrostatic bearings 59 of the guide mechanisms to exert entirely different functions, i.e., a machining function and a lubricating function. Therefore, the EDM of the present invention, differing from the conventional EDM, has the single machining liquid pump 40, and processes both the lubrication-purpose machining liquid and the machining-purpose machining liquid by the common machining liquid processing means including the pump 42 and the machining liquid filter 43 and, consequently, the auxiliary systems of the EDM are simplified and the machine unit 10 of the EDM can be formed in a reduced scale.

Since the pressurized machining liquid supplied to each guide mechanism including the hydrostatic bearing 59 contributes to cool the components of the machine unit through the guide mechanism and, consequently, the machine unit 10 of the EDM can be maintained in a substantially isothermal condition, and dimensional errors in the work processed by the EDM attributable to an irregular temperature distribution on the machine unit can be reduced.

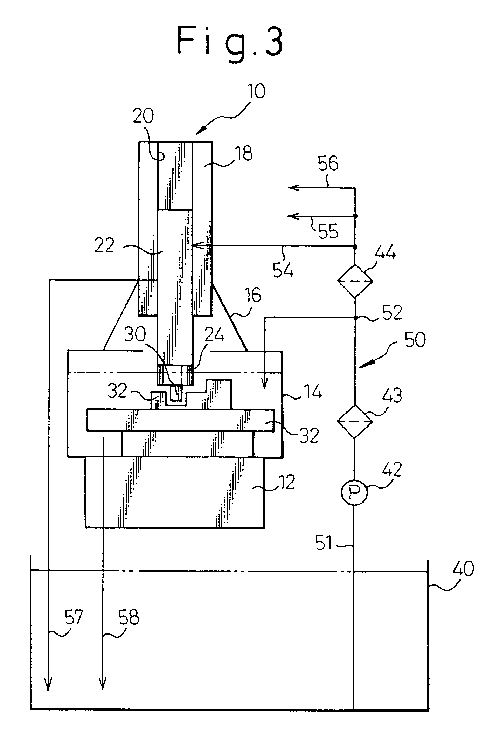

Figure 3 illustrates an EDM according to a second embodiment of the present invention, which differs from the embodiment shown in Fig. 1 in that additional machining liquid filters 44 are provided in lubrication-purpose machining liquid supply lines 54, 55 and 56 through which the lubrication-purpose machining liquid is supplied to hydrostatic bearings, such as the hydrostatic bearing 59, included in guide mechanisms to enhance the filtering action on the lubrication-purpose machining liquid. For example, the machining liquid filters 44 are intended to remove solid impurities and tar from the lubrication-purpose machining liquid to improve the lubricating ability and the reliability of the lubrication-purpose machining liquid in lubricating the hydrostatic bearings. Only one machining liquid filter 44 may be provided in a line connecting the lubricating-purpose machining liquid supply lines 54 to 56 to a branching point 52 instead of providing the machining liquid filters 44 in the lubrication-purpose machining liquid supply lines 54 to 56, respectively.

The rest of the constitution of the EDM is the same as that of the previously described embodiment, and hence, the description thereof will be omitted to avoid duplication.

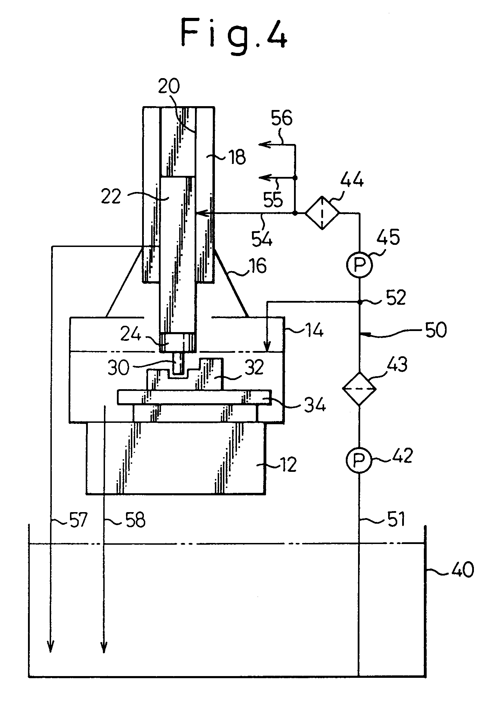

Figure 4 illustrates an EDM according to a third embodiment of the present invention. In this embodiment, an additional machining liquid filter 44 is disposed, as the additional machining liquid filter 44 of the second embodiment shown in Fig. 3 is disposed, and an additional pump 45 (second pump) is disposed below a pump 42 (first pump) with respect to the flowing direction of the machining liquid at a position immediately behind a branching point 52 to raise the pressure applied to the machining liquid by the second pump 45 to a pressure suitable for use with the hydrostatic bearings 59. The machining liquid discharged by the pump 45 is delivered to the additional filter 44 or the additional filters disposed respectively in lubrication-purpose machining liquid supply lines 54 to 56. This constitution increases the floating pressure for the bearings including the hydrostatic bearings 59 and thus more securely maintains a noncontact state between the sliding surfaces 22b and 22c of the sliding part 22a of a main shaft 22 and the sliding surfaces 20a and 20b of a guide surface portion 20, so that the sliding surfaces can be satisfactorily lubricated.

The rest of the constitution of the machine unit 10 of the EDM is the same as those of the first and the second embodiments.

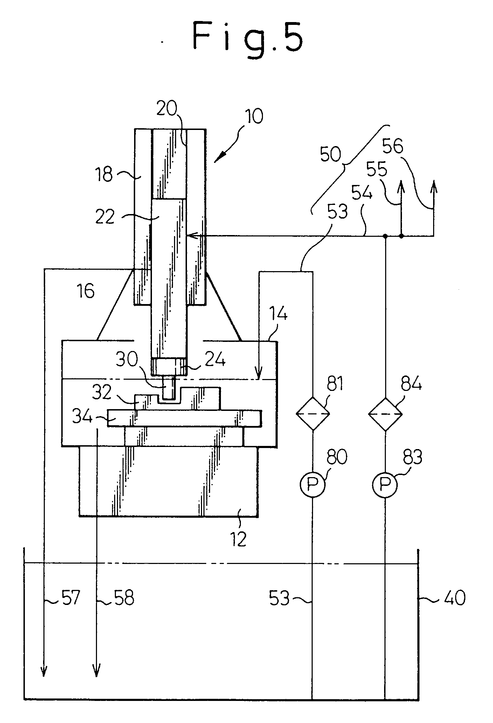

Figure 5 illustrates an EDM according to a fourth embodiment of the present invention. This embodiment has a machining liquid supply conduit system 50 having a machining liquid supply circuit including a machining liquid supply line 53 through which the machining-purpose machining liquid is supplied from a machining liquid tank 40 to a machining tank 14, and a machining liquid supply conduit system including lubrication-purpose machining liquid supply lines 54 through 56 by which the pressurized machining liquid is supplied to hydrostatic bearings 59 included in guide mechanisms. A pump 80, for pumping the machining liquid, and a machining liquid filter 81 are disposed in the machining liquid supply line 53.

A pump 83 to pump the machining liquid from a machining liquid tank 40 while pressurizing the same, and a machining liquid filter 84 are disposed in a machining liquid supply line connected to lubrication-purpose machining liquid supply lines 54 through 56 by which the lubrication-purpose machining liquid is supplied to hydrostatic bearings included in guide mechanisms to pressurize the lubrication-purpose machining liquid to a pressure appropriate to the hydrostatic bearings and to supply the lubrication-purpose machining liquid to the lubrication-purpose machining liquid supply lines 54 through 56 after filtering the machining liquid through the machining liquid filter 84.

Although the present embodiment, similarly to the previously described embodiments, uses the machining liquid both as the machining-purpose machining liquid for cooling the ED machining region and removing chips from the ED machining region and as the lubrication-purpose machining liquid for lubricating the hydrostatic bearings of the guide mechanisms, this embodiment has an advantage that the processing abilities of the pump 80 and the machining liquid filter 81, i.e., machining-purpose machining liquid processing means, and the pump 83 and the filter 84, i.e., lubrication-purpose machining liquid processing means, such as the pressurizing abilities of the pumps and the filtering abilities of the filters, can be selectively determined.

The rent of the constitution of the machine unit 10 of the EDM is the same as those of the first to the third embodiment.

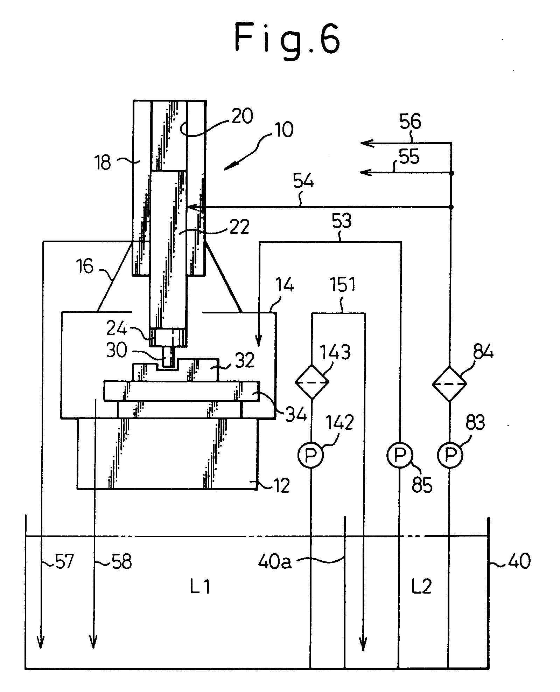

Figure 6 illustrates an EDM according to a fifth embodiment of the present invention. The present embodiment is provided with a machining liquid tank 40 internally provided with a partition plate 40a dividing the interior of the machining liquid tank 40 into a machining liquid recovering region L1 and a machining liquid supply region L2, and a machining liquid transfer line 151 provided with machining liquid processing means including a pump 142 and a machining liquid filter 143 to supply the recovered machining liquid into the machining liquid supply region L2 after filtering the recovered machining liquid.

The filtered machining liquid reserved in the machining liquid supply region L2 is supplied to an ED machining region in a machining tank 14, and hydrostatic bearings, such as the hydrostatic bearing 59, included in guide mechanisms.

The EDM, similarly to the EDM of the fourth embodiment shown in Fig. 5, pumps the machining-purpose machining liquid by a pump 85 and supplies the same through a machining-purpose machining liquid supply line 53 to an ED machining region in a machining tank 14 when using the filtered machining liquid for ED machining, and pumps the lubrication-purpose machining liquid by a pressurizing pump 83 and supplies the same through a machining liquid filter 84 and lubrication-purpose machining liquid supply lines 54 through 56 to the guide mechanisms when using the filtered machining liquid for lubrication.

The present embodiment, similarly to the previously described embodiments, uses the machining liquid both as the machining-purpose machining liquid for cooling the ED machining region and removing chips from the ED machining region and as the lubrication-purpose machining liquid for lubricating the guide mechanisms of the machine unit 10. Since this embodiment filters the previously filtered machining liquid again by the machining liquid filter 84 and supplies the thoroughly filtered machining liquid to the hydrostatic bearings of the guide mechanisms, the reliability of functions of the guide mechanisms can be maintained at a high level.

Since the machining-purpose machining liquid supply system and the lubrication-purpose machining liquid supply system of this embodiment are independent, the lubrication-purpose machining liquid can be supplied to the guide mechanisms even while the ED operation is stopped or interrupted for preparatory work or the like.

The machining liquid is returned from the guide mechanisms and the machining tank 14 through machining liquid recovering lines 57 and 58 into the machining liquid recovering region L1.

The rest of the constitution and operations of the machine unit of the EDM in this embodiment are entirely the same as those of the previously described embodiments and hence the description thereof will be omitted.

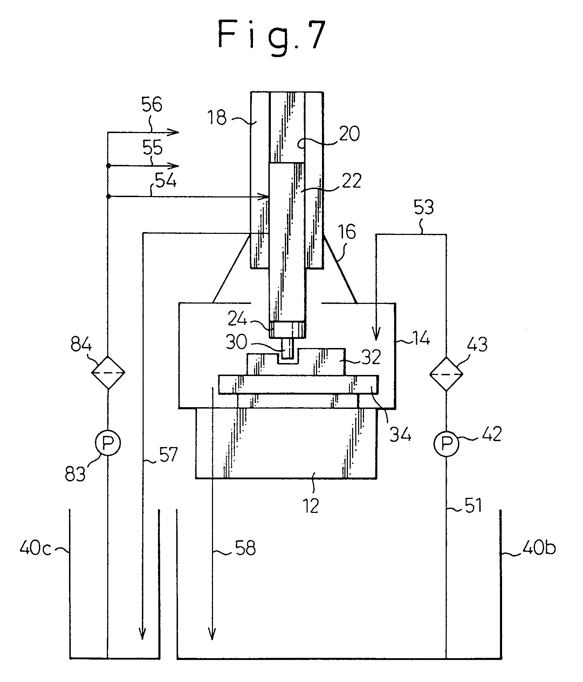

Figure 7 illustrates an EDM according to a sixth embodiment of the present invention. The constitution of a machining tank 14 and guide mechanisms included in this embodiment is the same as those of the previously described embodiment.

This embodiment is provided with a first machining liquid tank 40b and a second machining liquid tank 40b instead of the machining liquid tank of the foregoing embodiments, and machining liquids of the same quality are reserved in the machining liquid tanks 40b and 40c. The machining liquid contained in the first machining liquid tank 40b, similarly to the machining liquid in the embodiment shown in Fig. 1, is pressurized at an appropriate pressure by a pump 42 included in a machining liquid processing means, filtered by a machining liquid filter 43 and supplied through a machining-purpose machining liquid supply line 53 into a machining tank 14. The machining liquid supplied to the machining tank 14 is returned through a machining liquid recovering line 58 into the first machining liquid tank 40b.

On the other hand, the machining liquid contained in the second machining liquid tank 40c is supplied by a machining liquid processing means including a pressurizing pump 83 and a machining liquid filter 84 through lubrication-purpose machining liquid supply lines 53 through 56 to the guide mechanisms. The machining liquid supplied to the guide mechanisms is returned through a machining liquid recovering line 58 into the second machining liquid tank 40c.

In this embodiment, the lubrication-purpose machining liquid is supplied always from and returned to the second machining liquid tank 40c. Therefore, the lubrication-purpose machining liquid is not contaminated by chips produced by ED machining and the lubrication-purpose machining liquid can be advantageously maintained at a high cleanliness suitable for lubrication. However, since the machining liquid to be supplied from the first machining liquid tank 40b to the ED machining region and the machining liquid to be supplied from the second machining liquid tank 40c to the guide mechanisms are of the same composition, no problem arises in using the machining liquids for machining and lubrication even if those machining liquids are mixed and hence the EDM need not be provided with any special mechanism or means for preventing the machining liquids from being mixed. Accordingly, the auxiliary systems of the EDM, similarly to those of the foregoing embodiments, are more simple than those of the conventional EDM.

Although the EDMs according to the first through the sixth embodiment have been described as embodied in diesinking EDMs, it may be readily understood that the techniques of the present invention are applicable also to wire-cut EDMs using a wire electrode for cutting the work.

As is apparent from the foregoing description of the first through sixth embodiments of the present invention, according to the present invention, the EDM is provided with the lubrication-purpose machining liquid supply conduit system for supplying the machining liquid pressurized and filtered by the pressurized liquid processing means to the hydrostatic bearings of the guide mechanisms and for recovering the machining liquid, and the machining-purpose machining liquid supply conduit system for supplying the machining liquid filtered to remove chips therefrom to the electric discharge machining region in which the work is machined by the electrode, and the machining liquid is used both for lubricating the guide mechanisms and for cooling the ED machining region and removing chips from the ED machining region. The present invention produces the following effects.
(i) Since a fluid or a machining liquid of the same composition as that of the machining liquid for cooling ED machining region and removing chips from the ED machining region is used as a lubricating liquid for lubricating the sliding guide mechanisms of the machine unit of the EDM, the lubricating performance and the ED machining performance are not affected, and hence the operation of the EDM is not hampered, even if the liquid of the lubricating liquid system and that of the ED machining liquid system are mixed and hence the operability is improved.
(ii) Since the ED machining liquid can be used for lubricating the sliding guide mechanisms of the machine unit of the EDM, a special auxiliary system including a reservoir tank, a supply pump and a filter, for a lubricating liquid is not necessary, so that the auxiliary systems are simplified and the equipment costs and the manufacturing costs of the EDM can be reduced.
(iii) Since the same machining liquid is used both for lubrication and for machining in the ED machining region, the machine unit, as well as the ED machining electrode and the work, can be cooled by the same machining liquid. Accordingly, the machine unit can be maintained in a substantially isothermal condition and the temperature difference between the electrode, the work, and the machine unit can be maintained at a small value, so that the deterioration of the machining accuracy due to an irregular temperature distribution in the machine unit can be prevented.
(iv) Since the auxiliary systems of the EDM can be simplified, the EDM per se can be formed in a reduced scale and the equipment costs and the manufacturing costs of the EDM can be reduced.

### LIST OF REFERENCE CHARACTERS

- 10: Machine unit
- 12: Base
- 14: Machining tank
- 20: Guide surface
- 22: Main shaft
- 22a: Sliding part
- 22b: Sliding surface
- 22c: Sliding surface
- 30: Electric discharge machining electrode
- 32: Work
- 34: Work table
- 40: Machining liquid tank
- 40b: First machining liquid tank
- 40c: Second machining liquid tank
- 42: Pump
- 43: Machining liquid filter
- 50: Machining liquid supply system
- 52: Branching point
- 53: Machining-purpose machining liquid line
- 54: Lubrication-purpose machining liquid line
- 55: Lubrication-purpose machining liquid line
- 56: Lubrication-purpose machining liquid line
- 57: Machining liquid recovering line
- 58: Machining liquid recovering line
- 59: Hydrostatic bearing

## Claims

1. An electric discharge machine for machining a work by electric discharge between a machining electrode and said work, provided with hydrostatic bearing type guide mechanisms for guiding said machining electrode and said work for relative movement, said electric discharge machine comprising:
a machining liquid supply conduit system for distributing a machining liquid reserved in a machining liquid reservoir by pressure to an electric discharge machining region extending around said electrode and to said guide mechanisms;
a machining liquid processing means arranged in said machining liquid supply conduit system; and
a machining liquid recovering conduit system for recovering the used machining liquid from both said electric discharge machining region and said hydrostatic bearing type guide mechanism.

2. An electric discharge machine according to claim 1, wherein said machining liquid supply conduit system comprises a lubrication-purpose fluid circuit for supplying a pressurized machining liquid as a lubricating medium to said guide mechanisms, and a machining-purpose fluid circuit for supplying said machining liquid to said electric discharge machining region to cool said electrode and said work and to remove chips.

3. An electric discharge machine according to claim 1, wherein said machining liquid processing means comprises:
a pumping means for pumping said machining liquid from said machining liquid reservoir and to supply said liquid by pressure, and a filtering means for purifying said machining liquid.

4. An electric discharge machine according to claim 3, wherein said filtering means comprises:
at least two filter elements, the filtering ability of one of said two filter elements being higher than that of the other, and the former filter element is placed in said lubrication-purpose fluid circuit.

5. An electric discharge machine according to claim 3, wherein said pumping means comprises:
a first pump for pumping up said machining liquid from said machining liquid reservoir and pressurizing said machining liquid to be supplied both through said machining-purpose fluid circuit and through said lubrication-purpose fluid circuit, and
a second pump provided in said lubrication-purpose fluid circuit to pressurize said machining liquid to be supplied to said guide mechanisms at a pressure higher than that of said machining liquid to be supplied through said machining-purpose fluid circuit.

6. An electric discharge machine according to claim 1, wherein said machining liquid supply conduit system comprises a machining-purpose fluid circuit connecting said machining liquid reservoir to said electric discharge machining region, and a lubrication-purpose fluid circuit connecting said machining liquid reservoir to said guide mechanisms, said machining-purpose fluid circuit and said lubrication-purpose fluid circuit are provided individually with separate machining liquid processing means to enable said lubrication-purpose fluid circuit to function even while said machining-purpose fluid circuit is out of operation.

7. An electric discharge machine according to claim 6, wherein said machining liquid reservoir has a first machining liquid reserving unit for receiving said machining liquid recovered by said machining liquid recovering conduit system, and a second machining liquid reserving unit for receiving said machining liquid pumped from said first machining liquid reserving unit and filtered by a filter, and said machining liquid is supplied by pressure from said second machining liquid reserving unit into said machining liquid supply conduit system.

8. An electric discharge machine according to claim 6, wherein said machining liquid reservoir has a lubrication-purpose machining liquid reserving unit for reserving said machining liquid to be used for lubrication, and a machining-purpose machining liquid reserving unit for reserving said machining liquid to be used for machining, machining liquids of the same quality being reserved in said machining liquid reserving units, and said machining liquids being supplied separately from said lubrication-purpose machining liquid reserving unit and said machining-purpose machining liquid reserving unit into said lubrication-purpose fluid circuit and said machining-purpose fluid circuit, respectively, of said machining liquid supply conduit system.
